# DEMANDE DE BREVET EUROPEEN

(11) **EP 1 332 916 A1**
(43) Date de publication de la demande: **06.08.2003**
(21) Numéro de dépôt: 02292061.5
(22) Date de dépôt: 21.08.2002
(51) Int. Cl.: B60Q 1/44

(54) **Feu arrière automobile complémentaire, indiquant automatiquement tout ralentissement ou freinage éventuels avant l'allumage des feux de stop**

(30) Priorité: 01.02.2002 FR 0201206; 24.04.2002 FR 0205142
(71) Demandeur: Andrieu, Paul, 91550 Paray Vielle Poste (FR)
(72) Inventeur: Andrieu, Paul, 91550 Paray Vielle Poste (FR)

(57) **Abrégé**

Feu spécial violet ou d'une couleur appropriée, installé à l'arrière des véhicules automobiles, mis en oeuvre automatiquement avant l'allumage des feux de stop, par le câble reliant la pédale d'accélérateur au clapet d'admission des gaz du carburateur.

## Description

Les feux stop des véhicules automobiles ne s'allument que lors du freinage.

Entre la décision de freiner, le relâchement de la pédale d'accélérateur, le moment précis où le conducteur du véhicule appuie sur la pédale de frein, il s'écoule un certain temps pouvant être préjudiciable à la sécurité routière.

Par exemple, sur autoroute, à 130 Km/h, un retard d'une seule seconde équivaut à 36 mètres parcourus ; ceci pouvant être à l'origine d'accidents dramatiques.

Le but de la présente invention est d'indiquer clairement aux usagers de la route, tout ralentissement intempestif avant le freinage, c'est à dire avant l'allumage des feux de stop.

Pour ce faire, le dispositif comporte à l'arrière des véhicules, un feu spécial indépendant, violet ou d'une couleur appropriée et agréée.

Ce feu spécial violet, indépendant des feux de stop étant mis en oeuvre automatiquement avant freinage par le câble reliant la pédale d'accélérateur au clapet d'admission des gaz du carburateur.

Le dispositif ne comporte pas d'installation ou de montages particuliers au dessous des pédales.

Pour la mise oeuvre de ce feu spécial violet, un contacteur électro-mécanique réglable à volonté, est installé sur le câble de commande reliant la pédale d'accélérateur au clapet du carburateur.

Ce feu arrière d'avertissement préalable mis en oeuvre automatiquement avant l'allumage des feux de stop, peut avantageusement remplacer et être installé au lieu et place ou en complément du 3^{ème} feu de stop existant.

## Revendications

1. Indicateur visuel destiné à avertir les conducteurs des véhicules automobiles de tout ralentissement intempestif des véhicules qui les précèdent ; **caractérisé en ce qu'**il comporte à l'arrière des véhicules un feu spécial violet ou de couleur appropriée, indépendant des feux de stop, mis en oeuvre automatiquement avant freinage par le relachement du câble de commande reliant la pédale d'accélérateur au clapet d'admission des gaz du carburateur.

2. Dispositif selon la revendication 1, **caractérisé en ce qu'**un contacteur spécial réglable à volonté est installé à cet effet sur le câble de commande reliant la pédale d'accélérateur au clapet d'admission des gaz du carburateur.

3. Dispositif selon les revendications 1 et 2, **caractérisé en ce que** le feu violet spécial ou d'une couleur appropriée et agréée, est mis en oeuvre automatiquement avant l'allumage des feux de stop, sans installations ou montages particuliers au dessous des pédales.

4. Dispositif selon les revendications 1-2 ou 3, **caractérisé en ce que** ce feu arrière d'avertissement préalable est installé au lieu et place ou en complément du 3^{ème} feu de stop existant.

## Revendications modifiées

### Revendications modifiées conformément à la règle 86(2) CBE.

**1.** Indicateur visuel destiné à avertir les conducteurs des véhicules automobiles de tout ralentissement intempestif des véhicules qui les précèdent ; **caractérisé en ce qu'**il comporte à l'arrière des véhicules un feu spécial violet ou de couleur appropriée, indépendant des feux de stop, mis en oeuvre automatiquement avant freinage par le relachement du câble de commande reliant la pédale d'accélérateur au clapet d'admission des gaz du carburateur.

**2.** Dispositif selon la revendication 1, **caractérisé en ce qu**'un contacteur spécial réglabe à volonté est installé à cet effet sur le câble de commande reliant la pédale d'accélérateur au clapet d'admission des gaz du carburateur.

**3.** Dispositif selon les revendications 1 et 2, **caractérisé en ce que** le feu violet spécial ou d'une couleur appropriée et agréée, est mis en oeuvre automatiquement avant l'allumage des feux de stop, sans installations ou montages particuliers au dessous des pédales.

**4.** Dispositif selon les revendications 1-2 ou 3, **caractérisé en ce que** ce feu arrière d'avertissement préalable est installé au lieu et place ou en complément du 3^{ème} feu de stop existant.

**5.** Dispositif selon les revendications 1-2-3 ou 4, **caractérisé en ce que** ce feu arrière spécial sera automatiquement coupé lors du freinage, c'est à dire qu'il ne sera jamais allumé en même temps que les feux de stop.
